Europäisches Patentamt

European Patent Office

Office européen des brevets

(11) Publication number: **0 228 106**
**B1**

(12) **EUROPEAN PATENT SPECIFICATION**

(45) Date of publication of patent specification: **30.08.89**

(51) Int. Cl.⁴: **B 29 C 49/28, B 29 C 49/02**

(21) Application number: **86202082.3**

(22) Date of filing: **24.11.86**

(54) **Method for moulding hollow containers in molecularly orientatable plastics material.**

(30) Priority: **02.12.85 IT 2305385**

(43) Date of publication of application:
**08.07.87 Bulletin 87/28**

(45) Publication of the grant of the patent:
**30.08.89 Bulletin 89/35**

(84) Designated Contracting States:
**AT BE CH DE FR GB GR LI LU NL SE**

(56) References cited:
**EP-A-0 060 521**
**DE-A-2 503 911**
**FR-A-2 169 377**
**FR-A-2 314 042**
**FR-A-2 343 586**
**FR-A-2 542 252**
**GB-A-2 062 534**
**GB-A-2 094 220**
**GB-A-2 097 322**
**US-A-3 276 375**
**US-A-4 280 805**
**US-A-4 288 478**

(73) Proprietor: **Giacobbe, Ferruccio**
**Via Don Orione, 21**
**I-20132 Milano (IT)**

(72) Inventor: **Giacobbe, Ferruccio**
**Via Don Orione, 21**
**I-20132 Milano (IT)**

(74) Representative: **Raimondi, Alfredo, Dott. Ing.**
**Prof. et al**
**Studio Tecnico Consulenza Brevetti Piazzale**
**Cadorna 15**
**I-20123 Milano (IT)**

Courier Press, Leamington Spa, England.

# Description

This invention relates to a method of moulding hollow containers in molecularly orientatable plastics material according to the preamble of claim 1, which is based on GB—A—2094220. For many purposes containers of plastics material are used, suitable for containing liquids such as, for example, drinks and the like.

Such drinks frequently have added carbon dioxide, or indeed contain gases which can become released when the temperature varies or the drink is agitated, causing the container to become pressurised.

Containers suitable for this purpose must, therefore, be resistant to the internal pressure applied to them and, moreover, must also be impermeable over long periods to the gases dissolved in the contained liquids.

A plastics material suitable for this purpose is polyethylene terephthalate, which can be subjected to mechanical stretching deformations at an appropriate temperature, which impart to it a molecularly orientated structure suitable for providing characteristics of mechanical strength and impermeability to gases substantially higher than those of the non-orientated polymer and suitable for use in the aforementioned containers. Polyethylene terephthalate in fact, known by the abbreviation PET, has undergone in the years following its discovery a continual improvement of the technology of production, permitting the use of said material for a vast range of applications with rather successful results, in particular for the production of hollow objects such as containers, bottles and the like.

Compared with other materials, in fact, polyethylene terephthalate lends itself especially to the production of hollow objects, suitable for containing foods also saturated with gasses (of the orangeade type and so on).

For this purpose, it is particularly advantageous to achieve a molecular orientation in two orthogonal directions in the material, thereby obtaining the best results in regard to mechanical strength and impermeability to gases, of fundamental importance for such containers.

Some methods and apparatuses are known for the production of such containers, for example from GB—A2 094 220, but the method disclosed in this document does not enable to get a molecular orientation in the whole container: in fact some parts of the container, and particularly the neck of the container, are not subjected to mechanical deformation after the injection, so that no molecular orientation takes place in these areas.

The problem therefore arises of providing an apparatus and a method for the moulding of containers which shall enable a molecularly orientated structure to be obtained in the greater part of the container, with a rapid production cycle and high versatility in use, which shall be adaptable, for example, to seasonal variations in production or to other requirements. In particular it is important to submit to mechanical deformation at a proper temperature, the greatest part of the material forming the container, to achieve molecular orientation, and to carry out a thermal conditioning of the workpiece during moulding, at the moment of its mechanical deformation, which shall provide the maximum uniformity of temperature throughout the thickness of the workpiece, so as to achieve the orientation throughout the entire section subjected to deformation.

According to the present invention a method is provided of moulding hollow containers in molecularly orientatable plastics material, comprising the steps of injection moulding an internally hollow preform, closing at one end, having walls of great thickness and an open topped collar, bringing the preform to a temperature at which a molecular orientation takes place as a consequence of a mechanical deformation of the plastics material and, at this temperature, carrying out one of more axial elongations of the preform and blowmoulding the elongated preform, in which the step of injection moulding of the preform comprises the partial introduction of a mandrel into a mould block of an injection mould, the injection of a predetermined quantity of plastics material in the plasticized state, this quantity corresponding to the volume of the preform, into the space existing between mould block and mandrel, cooling the material down to a temperature at which a molecular orientation takes place as a consequence of a mechanical deformation in the material itself and the complete introduction of the mandrel into the mould block for forming the preform.

In a particular embodiment, the method of moulding hollow containers in molecularly orientatable plastics material according to the present invention comprises the steps of injection moulding of an internal hollow preform, closed at one end, of bringing the preform to a temperature at which a molecular orientation takes place as a consequence of a mechanical deformation in the plastics material, of carrying out one or more axial elongations of the preform itself and of discharging the elongated preform, having walls of reduced thickness, for storage, the preform being taken up later, after a storage period, raised to the temperature adapted for carrying out molecular orientation by drawing and shaped by blowmoulding to the form of the final receptacle, the step of injection moulding the preform first comprising injecting the material in the mould with mandrel partially inserted therein, cooling the material below the temperature of molecular orientation and then completing the insertion of the mandrel into the mould.

According to another aspect of the present invention, a method is disclosed of moulding preforms in molecularly orientatable plastics material, comprising the steps of injection moulding an internally hollow preform, closing at one end, having walls of great thickness and an open topped collar, bringing the preform to a temperature at which a molecular orientation takes place as a consequence of a mechanical deformation of the plastics material and, at this temperature, carrying out one or more axial elongations of the preform, the preforms being able to be blowmoulded in the form of a hollow container, the step of injection moulding of the preform comprising the partial introduction of a mandrel into a mould block of an injection mould, the injection of a predetermined quantity of plastics material in the plasticized state, this quantity corresponding to the volume of the preform, into the space existing between mould block and mandrel, cooling the material down to a temperature at which a molecular orientation takes place as a consequence of a mechanical deformation in the material itself and the complete introduction of the mandrel into the mould block for forming the preform.

For a better understanding of the invention and to show how the same may be carried into effect, reference will now be made, by way of example, to the accompanying drawings, in which:—

Figure 1 is a schematic plan view of one form of embodiment of an apparatus for moulding hollow containers in molecularly orientatable plastics material;

Figure 2 is a side view, partly in section, of the machine shown in Figure 1, in section along the line II—II;

Figure 3 is a section taken along the line III—III of Figure 1;

Figure 4 shows an injection moulding group in an open position;

Figure 5 shows the injection moulding group in a partly closed position;

Figure 6 shows the injection moulding group in the closed position;

Figure 7 shows a thermal conditioning and axial elongation group;

Figure 8 shows a blowmoulding group for the container;

Figure 9 shows a preform as produced by the injection moulding group;

Figure 10 shows the preform after a first elongation;

Figure 11 shows the preform after a second elongaton;

Figure 12 shows the preform after blowmoulding;

Figure 13 is a schematic plan view of the apparatus in one particular arrangement; and

Figure 14 is a schematic plan view of the apparatus in a different arrangement.

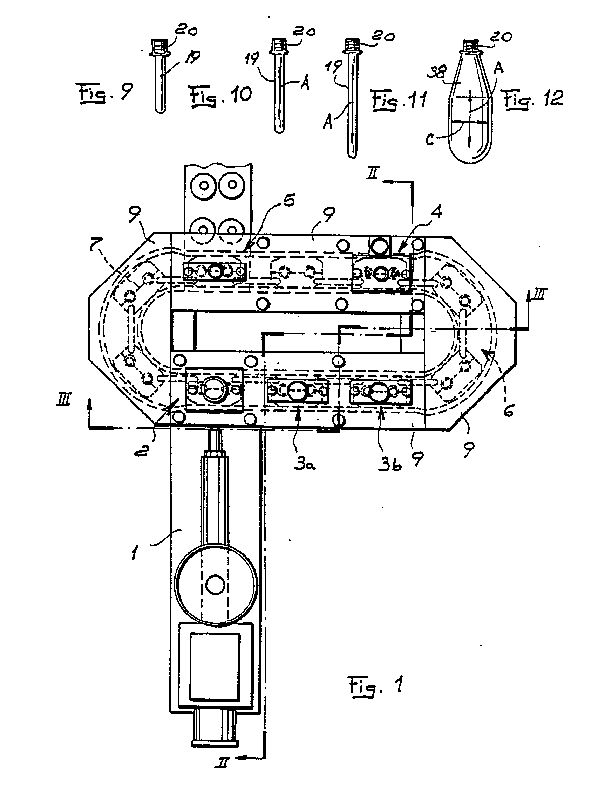

As Figure 1 shows, an apparatus for the production of hollow blowmoulded containers comprises substantially an extruder 1, capable of being connected to an injection moulding group 2, a plurality of thermal conditioning and axial elongation groups 3, a blowmoulding group 4 and a discharge station 5. These groups are connected to one another by a conveyor 6, equipped with trollies 7 carrying the workpieces during the moulding procedure.

The spacings between the trollies 7, which are connected to one another by rigid bars 8, is equal to or a sub-multiple of the distance existing between the aforementioned groups, in such a way that each forward step of the conveyor 6 corresponds to the locating of a trolley 7 beneath one of the working groups. The conveyor 6 is carried on floors 9, which support the groups present and are secured to a base frame 10 by columns 11.

The injection moulding group 2, illustrated in greater detail in Figure 4, is composed of a press, which comprises a mould block 12 and the mandrels 13; the mould block 12 is carried by a cylinder 14, by which it can be caused to approach the floor 9 and brought into the injection moulding position, becoming engaged onto conical projections 15a of the jaws 15 of the trolley 7, inside which jaws there are formed the mould cavities corresponding to the external surfaces of the neck of the receptacle. Pins or mandrels 13 are carried by a movable frame 16, operated by a cylinder 17 for introduction into mould cavities 18 of the mould block.

In correspondence with the mandrels 13, holes 9a are present in the floor 9 adapted for permitting the mandrels to enter the mould block 12, by passing through the trolley 7 locked in position beneath them; similar holes are also present in correspondence with the other groups of the apparatus.

The injection moulding group produces by moulding or pressing the hollow objects 19, known as "preforms", which are adapted to be subjected to the successive moulding operations.

These preforms remain, after moulding, suspended from the support jaws 15 of the trollies 17, which jaws contain the mould cavity adapted for permitting the shaping, during injection, of the neck of the container, bearing the threaded coupling 20.

The preforms 19 are then transferred by the conveyor 6 to the first thermal conditioning and axial elongation group 3a, where they are brought to the temperature necessary for performing on them a first elongation with molecular orientation in the axial direction, usually between 90°C and 110°C for polyethlylene terephthalate.

Each group 3, illustrated in detail in Figure 7, comprises thermal stabilisation moulds 21, adapted for bringing the preforms to the drawing temperature, these moulds being supported by a plate 22 which can be raised by a cylinder 23 until they close against the jaws 15, thus closing the preforms 19. Above the floor 9 there is a frame 24, on which is mounted a cylinder 25, carrying mandrels 26, suitably equipped with internal circulation of heat exchange fluid and adapted to be introduced into the preform 19 for the purpose of causing the desired elongation.

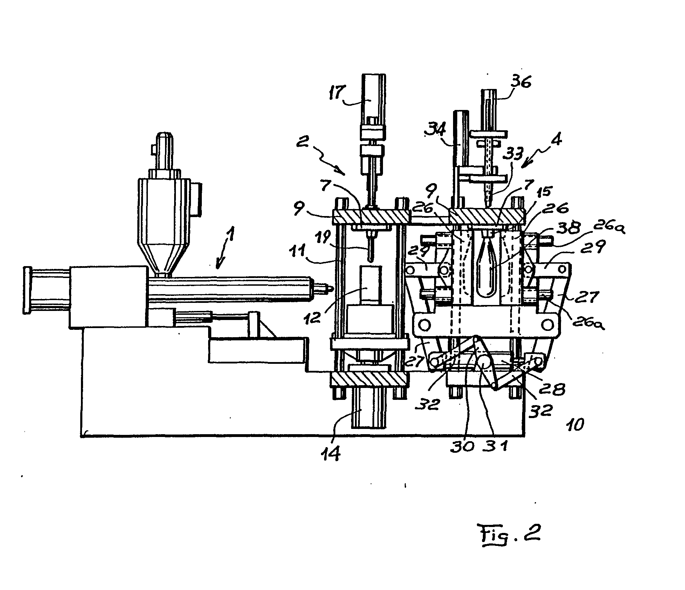

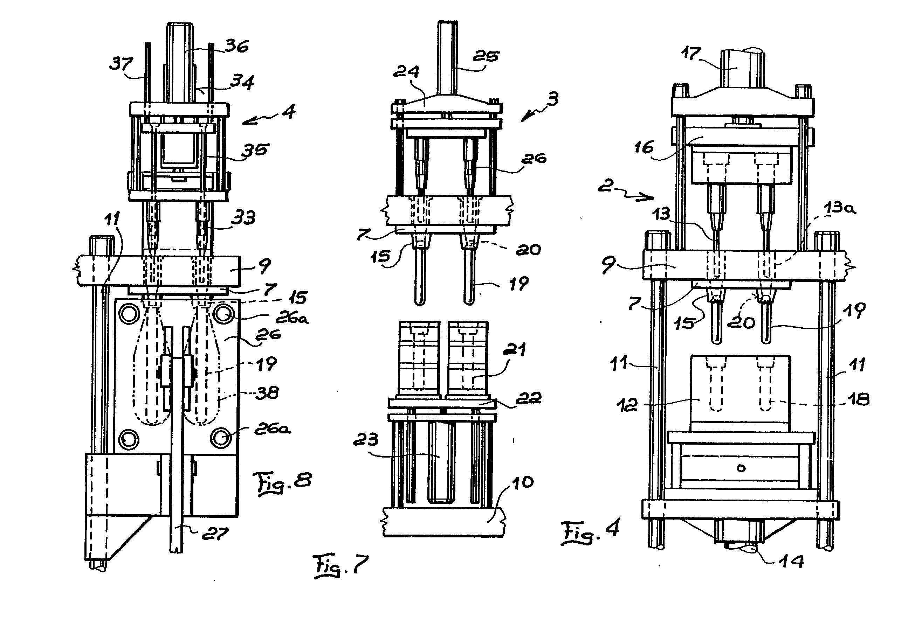

The blowmoulding group 4, illustrated in Figures 2, 3 and 8, comprises two half-moulds 26, capable of being clamped around the preforms 19 by means of a closure device, sliding on guide bars 26a.

The closure device may comprise, for example, as illustrated in Figure 2, a pair of levers 27, operated by a cylinder 28 and acting via rods 29 on the two half-moulds 26.

The ends of the cylinder 28 are articulated to the lower ends of the levers 27; for the purpose of permitting simultaneous closure of the two half-moulds 26 symmetrically about the centre line position of the blowmoulding group, that is in correspondence with the axis of the container to be moulded, a rocker lever 30 is provided, pivotal about a pin 31 and connected by connecting rods 32 to the ends of the cylinder 28.

Above this cylinder is located a blower device having nozzles 33, capable of being introduced by a cylinder 34 through the floor 9 and trollies 7 to fit into the preforms 19 and carrying bars 35 for centering the ends of the preforms during blowing, the bars being introduced into the preforms themselves by the cylinder 36, guided by columns 37. In this group, blown containers 38 are moulded, remaining suspended from the jaws 15. Blowing for moulding the containers 38 produces tension in the walls of the containers in a direction perpendicular to the tension produced by the elongation, thus producing containers having walls drawn in two orthogonal directions, thereby producing an optimum molecular orientation.

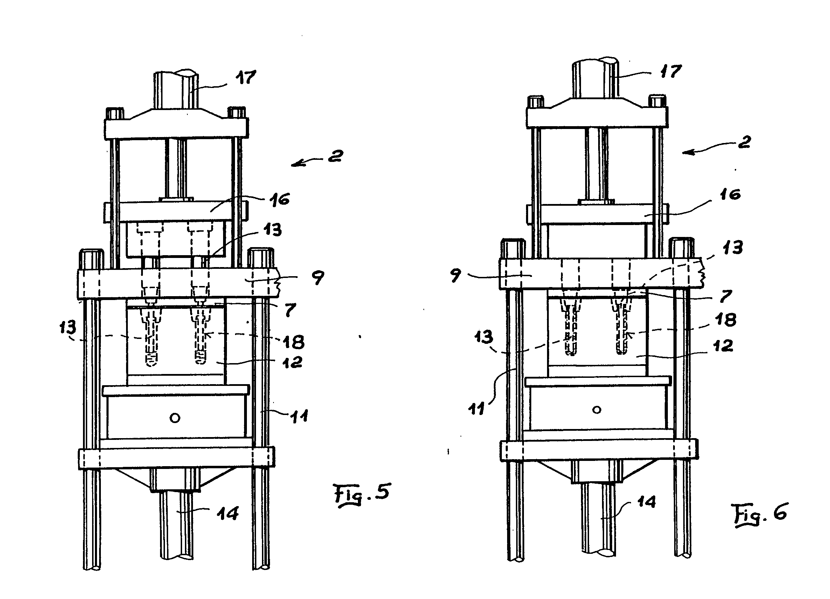

In fact, as indicated in Figures 9, 10, 11 and 12, the preform 19, which is shown in Figure 9 with the dimensions it possesses immediately after injection moulding, undergoes one or more axial elongations, shown in Figures 10 and 11, at the temperature at which the molecular orientation takes place, these axial elongations producing a first orientation in the direction indicated by the arrows A. The blowing operation then leads to a container having the form shown in Figure 12, and causes a drawing and molecular orientation in the circumferential direction, as indicated in the Figure by the arrow C, this orientation being added to the axial orientation A.

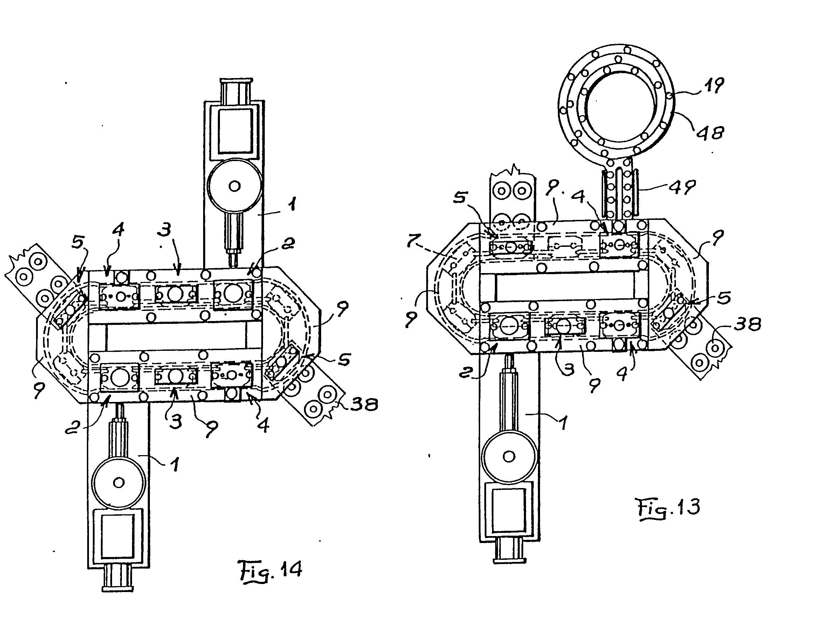

The structure of the apparatus enables the productive cycle to be carried out in the optimum manner, with reduction of the times required for the execution of the operations, and permits the maximum flexibility in operation, it being possible to vary the length of the conveyor and the number of groups mounted on it. For example, it is possible to decide upon an axial elongation of the preforms in one or more phases, by providing one or more elongation groups 3; to provide a discharge station for the injection moulded preforms, for example after they have been elongated, for the storage or sale of semi-finished products having a smaller bulk than the finished containers; to provide an automatic loading station 48 for the preforms, which previously have been stored, for the purpose of carrying out their blowing, as illustrated in Figure 13, associated with a preheating furnace 49 for the preforms adapted for raising them to the temperature at which the deformation with molecular orientation takes place; to provide further working stations, for various finishing operations and possibly for production-line filling of the containers produced, or again to provide two oppositely situated injection moulding groups, followed by associated axial elongation and blowing groups along the same conveyor, as illustrated in Figure 14.

The use of the apparatus permits, in particular, the subsidiary operations which can be carried out on the containers to be executed, such as labelling, checks and inspection of various types, surface coating, fitting of a support base, in-line filling and the like, all directly, by providing an appropriate extension of the conveyor so as to enable the further operating stations required to be arranged upon it, without the need to have recourse to one or more further machines, thereby achieving a considerable saving, both from the economic point of view and from the point of view of functioning and overall size of the various members necessary for the production of the finished container, which is thus completed in a single complex.

The presence of the elongation phases enables the thickness of the preform to be brought to a lower value, suitable for enabling a high uniformity in the temperature of the walls of the workpiece to be obtained in a short time in the successive working phases, which require an appropriate temperature for the workpieces and provide, for this purpose, thermal conditioning times, thus enabling a complete molecular orientation to be achieved throughout the thickness.

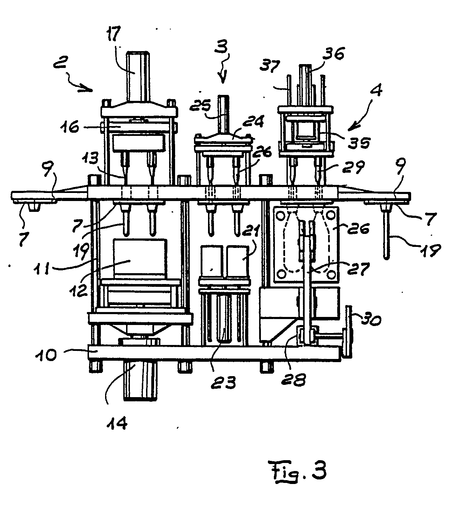

As shown in Figures 5 and 6, injection is arranged, in a convenient form of embodiment, in two successive phases. The first phase consists of injecting the material in the plastic condition by the mandrels 13, only partly inserted into the mould cavities 18 of the mould block 12, with partial filling of the voloume available; the second phase provides for the complete introduction of the mandrels into the respective mould cavities, causing the injected material to flow until it entirely fills the space available, thereby forming the neck and mouth of the receptacle.

This procedure enables injection to be carried out at a low pressure into the mould cavity, avoiding or considerably reducing the deterioration of the material and consequent formation of acetaldehyde. The second phase of moulding is formed with the material at a lower temperature than the injection temperature and makes it possible to impart to the material, which in this phase undergoes a mechanical deformation leading to a reduction in its thickness, an initial molecular orientation, which therefore leads to an improvement in its characteristics, in particular the permeability to gases, including in the zone of the neck, which is not further drawn later.

The drawing of the preform, carried out in two or more times, with the present apparatus and method, gives to the container an increased capacity for gas retention and a perfect distribution of the material, enabling a high uniformity of thickness to be achieved, with limited operating pressures and with reduction in the times required for the production cycle.

After the moulding of the preform by injection, in fact, the preform is stabilised in temperatures in two or more periods, using one or more predrawing stations, so as to decrease the total cycle time and to provide the possibility to the molecules of the materials to start the first orientation gradually, preconditioning them in the first phase and completing the orientation in the second phase.

In this manner, the preform is well stabilised throughout its length and the reheating times for same are reduced when it is desired to carry out blowing of the preform after a certain period of conservation time in the store, an operation which is possible only with this system.

## Claims

1. A method of moulding hollow containers in molecularly orientatable plastics material, comprising the steps of injection moulding an internally hollow preform, closed at one end, having walls of great thickness and an open topped collar, bringing the preform to a temperature at which a molecular orientation takes place as a consequence of a mechanical deformation of the plastics material and, at this temperature, carrying out one or more axial elongations of the preform and blowmoulding the elongated preform, characterized in that the step of injection moulding of the preform comprises the partial introduction of a mandrel into a mould block of an injection mould, the injection of a predetermined quantity of plastics material in the plasticized state, this quantity corresponding to the volume of the preform, into the space existing between mould block and mandrel, cooling the material down to a temperature at which a molecular orientation takes place as a consequence of a mechanical deformation in the material itself and the complete introduction of the mandrel into the mould block for forming the preform.

2. A method of moulding hollow containers in molecularly orientatable plastics material according to claim 1, characterized in that it comprises the steps of discharging the elongated preform, having walls of reduced thickness, for storage, after their axial elongations, the preform being taken up later, after a storage period, raised to the temperature adapted for carrying out molecular orientation by drawing and shaped by blowmoulding to the form of the final receptacle.

3. A method of moulding preforms in molecularly orientatable plastics material, comprising the steps of injection moulding an internally hollow preform, closed at one end, having walls of great thickness and an open topped collar, bringing the preform to a temperature at which a molecular orientation takes place as a consequence of a mechanical deformation of the plastics material and, at this temperature, carrying out one or more axial elongations of the preform, the preform being able to be blow moulded in the form of a hollow container, characterized in that the step of injection moulding of the preform comprises the partial introduction of a mandrel into a mould block of an injection mould, the injection of a predetermined quantity of plastics material in the plasticized state, this quantity corresponding to the volume of the preform, into the space existing between mould block and mandrel, cooling the material down to a temperature at which a molecular orientation takes place as a consequence of a mechanical deformation in the material itself and the complete introduction of the mandrel into the mould block for forming the preform.

## Patentansprüche

1. Verfahren zum Formen hohler Behälter aus molekular orientierbarem Kunststoff, welches die Schritte umfaßt: Spritzguß einer innen hohlen Vorform, die an einem Ende geschlossen ist, Wände mit großer Dicke und einen oben offenen Ansatz aufweist, Erhöhung der Temperatur der Vorform auf eine Temperatur, bei der die molekulare Orientierung als Folge der mechanischen Verformung des Kunststoffs stattfindet, und Durchführung einer oder mehrerer axialer Dehnungen der Vorform und Blasformen der Gedehnten Vorform bei dieser Temperatur, dadurch gekennzeichnet, daß der Schritt Spritzgießens der Vorform die teilwise Einführung eines Formkernes in den Formblock der Spritzform, das Einspritzen einer bestimmten Kunststoffmenge im erweichten Zustand, wobei diese Menge dem Volumen der Vorform entspricht, in den zwischen dem Formblock und dem Formkern vorhandenen Raum, das Abkühlen des Materials auf eine Temperatur, bei der die molekulare Orientierung als Folge der mechanischen Verformung des Materials selbst stattfindet und das vollständige Einführen des Formkerns in den Formblock zum Formen der Vorform umfaßt.

2. Verfahren zum Formen hohler Behälter aus molekular orientierbarem Kunststoff nach Anspruch 1, dadurch gekennzeichnet, daß es die Schritte der Abgabe der gedehnten Vorform mit Wänden geringerer Dicke zur Lagerung umfaßt, wobei die Vorform nach der axialen Dehnung später nach dem Lagerzeitraum aufgenommen wird, auf die zur Durchführung der molekularen Orientierung durch Ziehen geeignete Temperatur gebracht wird und durch Blasformen in die Endform des Behälters geformt wird.

3. Verfahren zum Formen von Vorformen aus molekular orientierbarem Kunststoff, welches die Schritte umfaßt: Spritzguß einer innen hohlen Vorform die an einem Ende geschlossen ist, Wände großer Dicke und einen oben offenen Ansatz aufweist, Temperaturerhöhung der Vorform auf eine Temperatur, bei der die molekulare Orientierung als Folge der mechanischen Verformung des Kunststoffs stattfindet, und Durchführung einer oder mehrerer axialer Dehnungen der Vorform bie dieser Temperatur, wobei die Vorform durch Blasformen in die Form eines hohlen Behälters gebracht werden kann, dadurch, gekennzeichnet, daß der Schritt des Spritzgießen der Vorform die teilweise Einnführung eines Forkkerns in den Formblock einer Spritzform, das Einspritzen einer bestimmten Kunststoffmenge im ereweichten Zustand, wobei diese Menge dem Volumen der Vorform entspricht, in den zwischen dem Formblock und dem Formblock vorhandenen Raum, das Abkühlen des Materials auf eine Temperatur, bei der die molekulare Orientierung als Folge der mechanischen Verformung im Material selbst stattfindet, und das vollständige Einführen des Formkerns in den Formblock zum Formen der Vorform umfaßt.

## Revendications

1. Un procédé de moulage de récipient creux dans une matière plastique moléculairement orientable, comprenant les étapes de moulage par injection d'une préforme intérieurement creuse, fermée à une extrémité, comportant des parois de grande épaisseur et un collet supérieur ouvert, amenant la préforme à une température à laquelle une orientation moléculaire a lieu comme conséquence d'une déformation mécanique de la matière plastique et, à cette température, la réalisation d'une ou plusieurs élongations axiales de la préforme et un moulage par soufflage de la préforme allongée, caractérisé en ce que l'étape de moulage par injection de la préforme comprend l'introduction partielle d'un mandrin dans un bloc moule d'un moule à injection, l'injection d'une quantité prédéterminée de matière plastique à l'état mou, cette quantité correspondant au volume de la préforme, dans l'espace existant entre un bloc moule et un mandrin, à refroidir le matériel jusqu'à une température à laquelle une orientation moléculaire a lieu comme une conséquence d'une déformation mécanique dans le matériau lui-même et l'introduction complète du mandrin dans le bloc moule pour former la préforme.

2. Un procédé de moulage de récipient creux dans une matière plastique moléculairement orientable, conformément à la revendication 1, caractérisé en ce qu'il comprend les étapes de déchargement des préformes allongées, comportant des parois de largeur réduite, pour stockage, après leurs élongations axiales, la préforme étant prélevée ultérieurement, après une période de stockage, élevée jusqu'à la température propre pour effectuer une orientation moléculaire par étirage et façonnée par moulage par soufflage jusqu'à la forme du réceptacle final.

3. Un procédé de préformage pour moulage dans une matière plastique moléculairement orientable comprenant les étapes de moulage par injection d'une préforme intérieurement creuse, fermée à une extrémité, comportant des parois de grande épaisseur et un collet supérieur ouvert, amenant la préforme à une température à laquelle une orientation moléculaire a lieu comme conséquence d'une déformation mécanique de la matière plastique et, à cette température, la réalisation d'une ou plusieurs élongations axiales de la préforme, la préforme pouvant être moulée par soufflage sous la forme d'un récipient creux, caractérisé en ce que l'étape de moulage par injection de la préforme comprend l'introduction partielle d'un mandrin dans un bloc moule d'un oule à injection, l'injection d'une quantité prédéterminée de matière plastique à l'état mou, cette quantité correspondant au volume de la préforme, dans l'espace existant entre un bloc moule et un mandrin, à refroidir le matériel jusqu'à une température à laquelle une orientation moléculaire a lieu comme une conséquence d'une déformation mécanique dans le matériau lui-même et l'introduction complète du mandrin dans le bloc moule pour former la préforme.

Fig. 9    Fig. 10    Fig. 11    Fig. 12

Fig. 1

Fig. 2

Fig. 3

Fig.8

Fig.7

Fig.4

EP 0 228 106 B1

Fig. 6

Fig. 5

Fig. 13

Fig. 14

EP 0 228 106 B1